# FASCICULE DE BREVET EUROPEEN

(11) **EP 1 290 051 B1**
(45) Date de publication et mention de la délivrance du brevet: **25.12.2013**
(21) Numéro de dépôt: 00972486.5
(22) Date de dépôt: 17.10.2000
(51) Int. Cl.: C08F 290/06, C09D 175/16, C09D 163/10

(54) **COMPOSITIONS A BASE DE RESINES EMULSIFIEES RETICULABLES PAR UV ET LEUR APPLICATION COMME COUCHE DE VERNIS POUR REVETEMENTS DE SOLS ET DE MURS**
ZUSAMMENSETZUNGEN BASIEREND AUF EMULGIERTEN, UV-VERNETZBAREN HARZEN UND IHRE ANWENDUNG ALS LACK FÜR BODEN- UND MAUERBESCHICHTUNGEN
COMPOSITIONS BASED ON EMULSIFIED UV-CURABLE RESINS AND USE THEREOF AS VARNISH COATING FOR FLOORING AND WALL FINISH

(30) Priorité: 15.06.2000 EP 00870129
(43) Date de publication de la demande: 12.03.2003
(73) Titulaire: Tarkett GDL S.A., 9779 Lentzweiler (LU)
(72) Inventeur: DAO VIET, Dung, B-4920 Aywaille (BE); HOUBA, Gabriel, L-9676 Noertrange (LU); SIMON, Jean-Yves, B-6810 Chiny (BE)
(74) Mandataire: Pronovem
(86) Numéro de dépôt international: PCT/BE2000/000124
(87) Numéro de publication internationale: WO 2001/096431

(56) Documents cités:
- GB-A- 2 256 874
- PATENT ABSTRACTS OF JAPAN vol. 1997, no. 09, 30 septembre 1997 (1997-09-30) & JP 09 137081 A (MITSUBISHI RAYON CO LTD), 27 mai 1997 (1997-05-27)
- PATENT ABSTRACTS OF JAPAN vol. 014, no. 068 (C-0686), 8 février 1990 (1990-02-08) & JP 01 289818 A (SHOWA HIGHPOLYMER CO LTD), 21 novembre 1989 (1989-11-21)

## Description

### Objet de l'invention

La présente invention concerne des compositions nouvelles de résines émulsifiées du type polyuréthanes ou autres, réticulables par UV et permettant, si l'on souhaite, une additivation aisée et qui sont faciles à mettre en oeuvre.

Elle concerne également l'application de telles compositions avec des additifs, comme couche de vernis pour améliorer entre autre les propriétés d'usure et de résistance aux salissures et la maîtrise du niveau de brillance des revêtements de sols et de murs.

### Arrière-plan technologique de l'invention

De nombr9.4eux revêtements de sols ou de murs se présentent sous forme de lés ou de dalles que l'on obtient par différentes techniques, notamment par enduction, en ayant recours à différentes matières synthétiques, telles que les résines de PVC ou semi-synthétiques, telles que le linoléum. Ces produits reçoivent généralement des couches de protection et en particulier un vernis pour mieux satisfaire aux exigences d'utilisation.

Ce vernis doit être transparent pour ne pas couvrir le décor sous-jacent, doit être stable pour éviter des modifications de coloration au cours du temps et doit présenter de bonnes caractéristiques de résistance à l'usure et aux salissures.

Il est généralement appliqué pour former un film très mince afin de préserver les effets de relief que l'on cherche généralement à obtenir sur le produit fini, notamment par grainage chimique ou mécanique.

On profite généralement de l'application du vernis pour y incorporer des additifs ou charges, améliorant l'aspect ou les propriétés du produit.

Ces produits de charge, tels que l'alumine présentent généralement des masses spécifiques élevées et il est difficile de réaliser et de conserver une dispersion homogène. Etant donné que ces produits exercent leur fonction essentiellement en surface, on comprendra qu'une décantation des charges, même pour une couche mince de vernis, n'est pas souhaitable.

L'utilisation de résines du type polyuréthane s'est révélée particulièrement intéressante suite à leurs propriétés intrinsèques, en particulier à cause de la possibilité de les réticuler facilement et rapidement par irradiation UV.

La réticulation UV s'est imposée de plus en plus dans des applications telles que des revêtements sur des matières plastiques, le bois et les laminés, le papier, le métal, le cuir, les textiles etc.

Elle est également fréquente notamment dans les encres et les adhésifs. Par exemple, GB 2 256 874 décrit des compositions photodurcissables comprennent un liant photopolymérisable comprenant un oligomère d'acrylate de polyuréthane multifonctionnel exploitable dans l'eau, un monomère d'acrylate multifonctionnel, de l'eau, un monomère d'éther de vinyle, et un photoinitiateur radicalaire, utilisables sous forme de vernis, de laque ou d'encre. Par ailleurs JP9137081 décrit une composition sous forme d'émulsion comprenant 10 à 70 parts en poids d'un mono- ou poly- penta-erythritol (meth)acrylate, 5 à 50 parts en poids d'un uréthane poly-(meth)acrylate comprenant au moins deux double liaisons polymérisables par voie radicalaire, 0 à 50 parts en poids d'un monomère ou oligomère polymérisable par voie radicalaire, 0,1 à 10 parts par poids d'un photoinitiateur, 2 à 24 parts en poids d'un surfactant polymérisables par voie radicalaire avec 0 à 30 parts en poids d'un absorbant d'UV, 0 à 5 parts en poids d'un photo stabilisateur à base d'amine substituée, et 10 à 900 parts en poids d'eau.

La réticulation par UV, comparée à d'autres type de réticulation, présente un grand nombre d'avantages parmi lesquels on peut citer la plus grande productivité résultant d'une plus grande vitesse et d'une moindre énergie, la compacité des installations et une meilleure protection de l'environnement à cause de la suppression totale ou de la réduction drastique de la quantité de solvants nécessaire et de leur moindre toxicité.

Cependant, la mise en oeuvre de certaines résines s'avère difficile, en particulier en cas d'additivation à l'aide de charges minérales ou autres.

Généralement, l'obtention d'une dispersion homogène et stable.des charges rend nécessaire de recourir à des résines de poids molécilaire élevé, avec comme conséquence des viscosités élevées, d'où la nécessité de travailler à température élevée pour réduire cette viscosité.

Actuellement, une formulation de type vernis à base de résine du type polyuréthane réticulable par UV comprend :
- une base oligomère qui définit les propriétés finales du produit réticulé ;
- des monomères monofonctionnels ou polyfonctionnels servant de diluants réactifs et d'aides à la réticulation ;
- des photosinitiateurs qui initient la réticulation et ;
- des additifs qui confèrent des propriétés spécifiques au produit.

Les oligomères généralement utilisés sont des polymères de poids moléculaire allant de 400 à 7000.

Ceux à faible poids moléculaire sont des liquides coulables.

Ceux à poids moléculaire élevé sont par contre difficilement manipulables à température ambiante.

La viscosité des oligomères varie de 10 à 100 Pa.s (10000 à 100000 cps) à température ambiante.

Ceci rend en général nécessaire d'utiliser des monomères pour abaisser la viscosité de la formule de mise en oeuvre finale.

Une autre façon de procéder est de recourir à des quantités importantes de solvants.

Dans ces cas, la viscosité de mise en oeuvre finale sera de l'ordre de quelques centaines de mPa.s.

Il convient de noter cependant que, contrairement aux oligomères qui sont considérés comme non toxiques, certains monomères sont soumis à des classifications et labellisations comme produits dangereux selon les directives en vigueur. L'utilisation massive de solvant est également à éviter pour des raisons similaires. En outre, les monomères mono-fonctionnels présentent l'inconvénient de ralentir fortement les vitesse de réticulation et de dégrader les performances.

On a donc proposé des oligomères modifiés par greffage de fonctions hydrophiles afin de les rendre compatibles avec un milieu aqueux.

Dans ce cas, on évite la présence de monomères dans la formule et atteint une viscosité de l'ordre de 10 Pa.s (100 poises) avec un extrait sec de 30 à 40%.

L'inconvénient principale est que les oligomères modifiés précités sont chers et que le choix en est limité.

Pour les oligomères non modifiés, les fournisseurs préconisent de ne pas utiliser d'eau ou de limiter sa présence à des teneurs ne dépassant pas quelques pourcents.

### Buts de l'invention

L'invention vise à éviter les inconvénients des solutions proposées selon l'état de la technique et vise en particulier à obtenir des compositions à base de résines émulsifiées en milieu aqueux, notamment du type polyuréthane, réticulables par UV, sans nécessiter le recours à un solvant ou à des oligomères modifiés.

### Eléments caractéristiques de l'invention

L'invention concerne une composition constituée par :
- une base oligomère non modifiée qui définit les propriétés finales du produit réticulé ;
- des aides à la réticulation constituées par des monomères polyfonctionnels ;
- des photoinitiateurs qui initient la polymérisation et ;
- des additifs qui confèrent des propriétés spécifiques au produit.

Cette composition est caractérisée en ce qu'elle se présente sous forme d'une émulsion homogène et stable dans laquelle le pourcentage en poids d'eau dans le mélange eau et résine est compris entre 5 et 35%, et de préférence entre 10 et 25%.

Le terme résine s'applique à l'ensemble des oligomères présents et des aides à la réticulation précités.

Cette solution présente l'avantage de ne pas devoir utiliser de solvants et de monomères mono-fonctionnels très volatiles.

Cette composition par un choix approprié des résines, en tenant compte de la présence éventuelle d'additifs, permet d'adapter la viscosité en agissant dans les limites indiquées sur le rapport pondéral eau/résine.

Lors de la mise en oeuvre comme vernis pour revêtements de sols ou de murs par des techniques classiques bien connues du praticien, on peut en cas de nécessité adapter la viscosité finale nécessaire à l'équipement utilisé par le recours à de faible quantité de solvants appropriés.

Alors qu'on rencontre avec les compositions formulées à 100% de résine acrylate des difficultés d'obtention de surfaces mattes, cette difficulté ne se présente pas avec les compositions de l'invention qui permettent, sans difficulté, d'incorporer des charges mattantes.

De manière générale, les compositions de l'invention s'adaptent aisément à l'incorporation de charges multiples, de toute nature.

On utilisera notamment les agents mattants et renforçants suivants :
1. agents mattants :
   - silice pyrrogénée ;
   - micronized matting agent ;
   - cire polyoléfine ;
   - cire polyamide ;
   - cire PTFE.
2. *agents renforçants* :
   - quartz ;
   - dioxide de silicium ;
   - carbure de silicium ;
   - Al₂O₃ (corindon) ;
   - bille de verre ;
   - carbure de tungstène.

Ceci s'applique aux charges mattantes dont la teneur peut varier entre 0 et 10 % et aux charges renforçantes et anti-usure dont la teneur peut varier entre 0 et 30%. Ces teneurs sont des valeurs pondérales exprimées par rapport à la résine (pcr).

Grâce à la bonne dispersion des charges que permettent les compositions de l'invention, on peut optimaliser les teneurs des constituants, sans obligation de « surcharger » pour être certain d'obtenir en surface la quantité requise d'additifs.

On observera, même pour des produits de forte densité (tels que l'alumine : densité de l'ordre de 4) peu de décantation et une remise facile en suspension.

A titre d'illustration non limitative d'oligomères non modifiés, pouvant être utilisés selon l'invention, on peut citer :
- uréthane acrylate ;
- époxy acrylate ;
- polyester acrylate ;
- polyéther acrylate et ;
- silicone acrylate ;
Les viscosités sont comprises entre 10 et 100 Pa.s (10000 et 100000 cps).

A titre d'exemple de monomères polyfonctionnels agissant comme aide à la réticulation, on peut citer :
- GPTA (glyceryl propoxylate triacrylate) ;
- HDDA (hexanediol diacrylate) ;
- TPGDA (tripropylèneglycol diacrylate) ;
- TMPTA (triméthylolpropane triacrylate) ;
- PETIA (pentaérytrithol tri et tétraacrylate) ;

Le pourcentage en poids du monomère dans le mélange monomère polyfonctionnel et oligomère non modifié est compris entre 0 et 35%.

En tant que photoinitiateurs, on peut utiliser :
- alpha-hydroxyketone ;
- alpha-amino-ketone ;
- benzyldiméthyl-kétal
- Benzophénone

Ces photoinitiateurs sont utilisés dans des proportions habituelles dépendant de l'oligomère et du monomère polyfonctionnel mis en oeuvre.

L'invention sera décrite plus en détail en référence à un mode d'exécution préféré de l'invention, illustré par l'exemple qui suit et le schéma opératoire de production d'un revêtement de sol.

### Exemple

| NATURE | NOM | FABRICANT | F1 | F2 | F3 | F4 |
|---|---|---|---|---|---|---|
| 1. Polyuréthanne Aliphatique | CN 965 | CRAY VALLEY | 100 | -- | -- | -- |
| 2- Epoxy acrylate | CN104 | CRAY VALLEY | 100 | -- | -- | -- |
| 3- Trimethylolpropane triacrylate | SR 350 | CRAY VALLEY | 20 | 20 | 20 | 20 |
| 4- Tensio-actif | FC 430 | 3M | 0.4 | 0.4 | 0.4 | 0.4 |
| 5- Photoinitiateur 1173 | Darocure | CIBA | 3 | 3 | 3 | 3 |
| 6- Agent mattant | OK 412 | DEGUSSA | -- | -- | 3 | 3 |
| 7- Agent renforçant | Al₂0₃ | SEMANAZ | -- | -- | 18 | 18 |
| 8- Eau | | | 30 | 30 | 30 | 30 |

### Mise en oeuvre

*F1* :
   - ajouter le polyuréthane aliphatique, le trimethylolpropane triacrylate, le tensio-actif, le photoinitiateur progressivement et mélanger au DISPERMAT CV à 1000 trs/mn pendant 10 minutes.
   - ajouter progressivement de l'eau à 4000 trs/mn pendant 15 minutes.
*F2* :
   - ajouter l'epoxy acrylate, le trimethylolpropane triacrylate, le tensio-actif, le photoinitiateur progressivement et mélanger au DISPERMAT CV à 1000 trs/mn pendant 10 minutes.
   - ajouter progressivement de l'eau à 4000 trs/mn pendant 15 minutes.
*F3* :
   - ajouter le polyuréthane aliphatique, le trimethylolpropane triacrylate, le tensio-actif, le photoinitiateur progressivement et mélanger au DISPERMAT CV à 1000 trs/mn pendant 10 minutes.
   - ajouter l'agent mattant et l'agent renforçant progressivement puis homogénéiser à 2000 trs/mn pendant 10 minutes.
   - ajouter progressivement de l'eau à 4000 trs/mn pendant 15 minutes.
*F4* :
   - ajouter l'époxy acrylate, le trimethylolpropane triacrylate, le tensio-actif, le photoinitiateur progressivement et mélanger au DISPERMAT CV à 1000 trs/mn pendant 10 minutes.
   - ajouter l'agent mattant et l'agent renforçant progressivement puis homogénéiser à 2000 trs/mn pendant 10 minutes.
   - ajouter progressivement de l'eau à 4000 trs/mn pendant 15 minutes.

Le tableau qui suit reprend les propriétés comparatives d'une part pour les solutions de l'état de la technique, à savoir polyuréthane à 100% d'extrait sec et polyuréthanne aqueux à 40% d'extrait sec, comparées au polyuréthanne émulsifié selon l'invention.

**TABLEAU**

| **PROPRIETES** | **CHOIX DES RESINES** | | |
|---|---|---|---|
| | PU 100% (oligomère non modifié) | PU aq/UV (oligomère modifié) | PU émulsifié (Selon l'invention) |
| Réglage de Viscosité | Avec monomères | Sans monomère | Sans ou peu monomères |
| Mise en oeuvre | Limitation du type d'outils | Peu de problème (tous types d'outils) | Peu de problème (tous types d'outils) |
| Dépôt Mince | Difficile | Facile | Facile |
| Brillance | | | |
| High gloss | Elevée (->95) | Limitée (->85) | Elevée (->95) |
| Mat | Obtention difficile | Facile | Facile |
| Intégration des charges | Décantation | Décantation | Bonne stabilité de suspension |
| Dispersion des charges | Mauvaise | Moyenne | Bonne |

## Revendications

1. Composition à base de résines émulsifiées réticulables par UV constituée par :
- une base oligomère non modifiée qui définit les propriétés finales du produit réticulé ;
- des aides à la réticulation comportant des monomères polyfonctionnels ;
- des photoinitiateurs qui initient la polymérisation ;
- des additifs conférant des propriétés spécifiques au produit, lesdits additifs étant des charges mattantes et/ou des charges_renforçantes et anti-usure,
ladite composition se présentant sous forme d'une émulsion homogène et stable dans laquelle le pourcentage en poids d'eau dans le mélange eau et résine est compris entre 10 et 25%.

2. Composition selon la revendication 1, **caractérisée en ce que** lesdites charges mattantes sont sélectionnées parmi le groupe de la silice pyrogénée, de la cire polyoléfine, de la cire polyamide et de la cire PTFE.

3. Composition selon la revendication 2, **caractérisée en ce qu'**elle contient jusqu'à 10% en poids par rapport à la résine (pcr) de charges mattantes.

4. Composition selon la revendication 1, **caractérisée en ce que** lesdites charges renforçantes et anti-usure sont sélectionnées parmi le groupe du quartz, du dioxyde de silicium, du carbure de silicium, du corindon, des billes de verre et du carbure de tungstène.

5. Composition selon la revendication 4, **caractérisée en ce que** ladite charge renforçante est le corindon (Al₂O₃).

6. Composition selon la revendication 4, **caractérisée en ce que** les dites charges renforçantes et anti-usure représentent jusqu'à 30% en poids par rapport à la résine (pcr).

7. Composition selon l'une quelconque des revendications 1 à 6, **caractérisée en ce que** la base oligomère non modifiée est choisie parmi un ou plusieurs des composés
- uréthane acrylate ;
- époxy acrylate ;
- polyester acrylate ;
- polyéther acrylate.

8. Composition selon l'une quelconque des revendications 1 à 7, **caractérisée en ce que** le monomère polyfonctionnel agissant comme aide à la réticulation est choisi parmi un ou plusieurs des composés :
- GPTA (glycéryl propoxylate triacrylate) ;
- HDDA (hexanediol diacrylate) ;
- TPGDA (tripropylèneglycol diacrylate);
- TMPTA (triméthylolpropane triacrylate);
- PETIA (pentaérytrithol tri et tétraacrylate).

9. Composition selon l'une quelconque des revendications 1 à 8, **caractérisée en ce que** le pourcentage en poids du monomère dans le mélange monomère polyfonctionnel et oligomère non modifié représente jusqu'à 35%.

10. Composition selon l'une quelconque des revendications 1 à 9, **caractérisée en ce que** le photoinitiateur est choisi parmi un ou plusieurs des composés :
- alpha-hydroxykétone ;
- alpha-amino-kétone ;
- benzyldiméthyl-kétal ;
- benzophénone.

11. Utilisation des compositions selon l'une quelconque des revendications 1 à 10 comme couche de vernis pour les revêtements de sols et de murs.

## Patentansprüche

1. Zusammensetzung auf Basis von UV-vernetzbaren emulgierten Harzen, bestehend aus:
- einer nicht modifizierten oligomeren Basis, die die End-Eigenschaften des vernetzten Produkts bestimmt;
- Vernetzungshilfsmitteln, die polyfunktionelle Monomere umfassen;
- Photoinitiatoren, die die Polymerisation initiieren;
- Additiven, die dem Produkt spezifische Eigenschaften verleihen, wobei es sich bei den Additiven um mattierende Füllstoffe und/oder verstärkende und gegen Verschleiß schützende Additive handelt,
wobei die Zusammensetzung in Form einer homogenen und stabilen Emulsion vorliegt, in der der Gewichtsprozentanteil von Wasser in der Wasser-Harz-Mischung zwischen 10 und 25% liegt.

2. Zusammensetzung nach Anspruch 1, **dadurch gekennzeichnet, dass** die mattierenden Füllstoffe aus der Gruppe pyrogenes Siliciumdioxid, Polyolefinwachs, Polyamidwachs und PTFE-Wachs ausgewählt sind.

3. Zusammensetzung nach Anspruch 2, **dadurch gekennzeichnet, dass** sie bis zu 10 Gew.-%, bezogen auf das Harz (phr), mattierende Füllstoffe enthält.

4. Zusammensetzung nach Anspruch 1, **dadurch gekennzeichnet, dass** die verstärkenden vor Verschleiß schützenden Füllstoffe aus der Gruppe Quarz, Siliciumdioxid, Siliciumcarbid, Korund, Glaskugeln und Wolframcarbid ausgewählt sind.

5. Zusammensetzung nach Anspruch 4, **dadurch gekennzeichnet, dass** es sich bei dem verstärkenden Füllstoff um Korund (Al₂O₃) handelt.

6. Zusammensetzung nach Anspruch 4, **dadurch gekennzeichnet, dass** die verstärkenden vor Verschleiß schützenden Füllstoffe bis zu 30 Gew.-%, bezogen auf das Harz (phr), ausmachen.

7. Zusammensetzung nach einem der Ansprüche 1 bis 6, **dadurch gekennzeichnet, dass** die nicht modifizierten Oligomere aus einer oder mehreren der Verbindungen:
Urethanacrylat;
Epoxyacrylat;
Polyesteracrylat;
Polyetheracrylat
ausgewählt sind.

8. Zusammensetzung nach einem der Ansprüche 1 bis 7, **dadurch gekennzeichnet, dass** das als Vernetzungshilfsmittel wirkende polyfunktionelle Monomer aus einer oder mehreren der Verbindungen:
- GPTA (Glycerylpropoxylattriacrylat);
- HDDA (Hexandioldiacrylat);
- TPGDA (Tripropylenglykoldiacrylat);
- TMPTA (Trimethylolpropantriacrylat);
- PETIA (Pentaerythrittri- und -tetraacrylat) ausgewählt ist.

9. Zusammensetzung nach einem der Ansprüche 1 bis 8, **dadurch gekennzeichnet, dass** der Gewichtsprozentanteil des Monomers in der Mischung von polyfunktionellem Monomer und nicht modifiziertem Oligomer bis zu 35% ausmacht.

10. Zusammensetzung nach einem der Ansprüche 1 bis 9, **dadurch gekennzeichnet, dass** der Photoinitiator aus einer oder mehreren der Verbindungen:
- α-Hydroxyketon;
- α-Aminoketon;
- Benzildimethylketal;
- Benzophenon
ausgewählt ist.

11. Verwendung der Zusammensetzungen nach einem der Ansprüche 1 bis 10 als Lackschicht für Boden- und Wandbeläge.

## Claims

1. Composition based on UV-crosslinkable emulsified resins composed of:
- an unmodified oligomeric base which defines the final properties of the crosslinked product;
- crosslinking aids comprising polyfunctional monomers;
- photoinitiators which initiate the polymerization;
- additives which confer specific properties on the product, the said additives being matting fillers and/or reinforcing and wear-resistant fillers,
the said composition being provided in the form of a homogeneous and stable emulsion in which the percentage by weight of water in the water and resin mixture is between 10% and 25%.

2. Composition according to Claim 1, **characterized in that** the said matting fillers are selected from the group consisting of fumed silica, polyolefin wax, polyamide wax and PTFE wax.

3. Composition according to Claim 2, **characterized in that** it comprises up to 10% by weight with respect to the resin (phr) of matting fillers.

4. Composition according to Claim 1, **characterized in that** the said reinforcing and wear-resistant fillers are selected from the group of quartz, silicon dioxide, silicon carbide, corundum, glass beads and tungsten carbide.

5. Composition according to Claim 4, **characterized in that** the said reinforcing filler is corundum (Al₂O₃).

6. Composition according to Claim 4, **characterized in that** the said reinforcing and wear-resistant fillers represent up to 30% by weight with respect to the resin (phr).

7. Composition according to any one of Claims 1 to 6, **characterized in that** the unmodified oligomeric base is chosen from one or more of the compounds:
- urethane acrylate;
- epoxy acrylate;
- polyester acrylate;
- polyether acrylate.

8. Composition according to any one of Claims 1 to 7, **characterized in that** the polyfunctional monomer acting as crosslinking aid is chosen from one or more of the compounds:
- GPTA (glyceryl propoxylate triacrylate);
- HDDA (hexanediol diacrylate);
- TPGDA (tripropylene glycol diacrylate);
- TMPTA (trimethylolpropane triacrylate);
- PETIA (pentaerythritol tri- and tetraacrylate).

9. Composition according to any one of Claims 1 to 8, **characterized in that** the percentage by weight of the monomer in the polyfunctional monomer and unmodified oligomer mixture represents up to 35%.

10. Composition according to any of Claims 1 to 9, **characterized in that** the photoinitiator is chosen from one or more of the compounds:
- α-hydroxyketone;
- α-aminoketone;
- benzil dimethyl ketal;
- benzophenone.

11. Use of the compositions according to any one of Claims 1 to 10 as varnish layer for floor and wall coverings.
